# EUROPEAN PATENT APPLICATION

(11) **EP 4 718 398 A1**
(43) Date of publication of application: **01.04.2026**
(21) Application number: 25745246.6
(22) Date of filing: 24.01.2025
(51) Int. Cl.: G06V 30/412, G06V 10/776, G06V 30/19, G06T 11/20, G06F 16/901, G06N 3/0455

(54) **SYSTEM, METHOD, AND PROGRAM FOR TRAINING OR PERFORMANCE EVALUATION OF CHART DE-RENDERING ARTIFICIAL INTELLIGENCE MODEL BY USING DATA SET INCLUDING CONSTRUCTED CHART INFORMATION**

(30) Priority: 25.01.2024 KR 20240011843
(71) Applicant: LG Management Development Institute Co., Ltd., Seoul 07336 (KR)
(72) Inventor: RYOO, Kwangrok, Seoul 07788 (KR); LEE, Seungjun, Gimpo-si Gyeonggi-do 10099 (KR); LEE, Soonyoung, Seoul 06299 (KR)
(74) Representative: BCKIP Part mbB
(86) International application number: PCT/KR2025/001492
(87) International publication number: WO 2025/159577

(57) **Abstract**

A system, method, and program for evaluating the performance of an artificial intelligence model that de-renders a chart or for training the artificial intelligence model by constructing a data set including chart information is disclosed. The system includes a memory in which a data set generation model and an AI model are included, and a processor configured to execute or train the AI model and execute a performance evaluation model, wherein the data set generation model stores line information, which is information about at least one line of a chart, and meta information, which is information about meta data, as ground truth (GT), stores an image formed using the GT as a chart image, and outputs the GT and the chart image as a data set, and the AI model receives the chart image stored in the data set as input and outputs a data format in which information of the chart is predicted. The parameters included in the line information may include an X-axis value of a chart line, a function, a coefficient of the function, a color or a shape of a line or a point, etc. and the parameters included in the meta information may include a chart title, an X-axis name, a Y-axis name, a legend, etc. Furthermore, the data format output from the AI model may be used to evaluate the performance of the AI model or to train the AI model.

## Description

### [Technical Field]

The present invention relates to a system, method, and program for evaluating the performance of a chart de-rendering model or training the model by constructing a data set including chart information, and more particularly, the present invention relates to a system, method, and program for evaluating the performance of an artificial intelligence model that de-renders a chart or training the artificial intelligence model by constructing a data set including chart information.

### [Background Art]

Chart de-rendering refers to a process opposite to chart rendering, and refers to an operation extracting key information by analyzing and grouping visual patterns or information of a chart, and extracting information about the data (for example, numerical values, groups, etc.), information about chart layout, etc. from the key information.

For the chart de-rendering, a data set composed of a chart image including text, lines, etc., and ground truth (GT) including information about the chart, is inputted into an AI model. The data set must be refined so that the AI model can recognize it and must include various styles of data so that the AI model can be evaluated or trained from multiple perspectives.

As a conventional method for constructing the data set, a method of collecting data by crawling a specific website or the like has been used (PlotQA: Reasoning over Scientific Plots, Nitesh Methani et al., 2020).

The method has a limitation in the amount of data included in the data set, and often only data written in a specific style is collected, so there is a problem of a lack of diversity of the collected data.

Furthermore, the chart de-rendering AI model recognizes not only numerical information included in the data but also meta information, but there is also a problem in that the meta information (e.g., names of an X-axis and a Y-axis, names of entity groups recorded in a legend, etc.) is often not properly included in the data collected by crawling.

In addition, in order to more accurately evaluate or train the AI model, it is necessary to use a method of classifying chart images drawn in a similar style into an experimental group and a control group and comparing the results, but according to the conventional data set construction method, it is difficult to collect chart images of a similar style, so it is impossible to use the comparison method as described above.

(Prior Art Documents Non-Patent Literature 1) PlotQA: Reasoning over Scientific Plots, Nitesh Methani et al., 2020.

### [Disclosure]

### [Technical Problem]

An object of the present invention is directed to providing a system, method, and program for evaluating the performance of an artificial intelligence model that de-renders a chart or training the artificial intelligence model by constructing a large amount of data sets including chart information.

Objects of the present invention are not limited to the above-described object, and other objects that are not mentioned will be clearly understood by those skilled in the art from the following description.

### [Technical Solution]

A system for implementing a chart de-rendering model according to the present invention includes at least one processor, and at least one memory storing a command or information that cause the at least one processor to perform an operation, wherein the operation performed by the command includes storing, by a data set generation model, line information, which is information about at least one line of a chart, and meta information, which is information about meta data, as ground truth (GT), storing an image formed using the GT as a chart image, and outputting the GT and the chart image as a data set, inputting the chart image stored in the data set into an AI model and outputting a data format in which information of the chart is predicted, and inputting the data format into a performance evaluation model and outputting a performance evaluation result for the AI model by comparing information of the data format with the GT stored in the data set, wherein a value applied to each parameter included in the line information and each parameter included in the meta information is selected from among predetermined values.

The system may further include inputting the data format output from the AI model into the performance evaluation model and outputting the performance evaluation result for the AI model by comparing the information of the data format with the GT stored in the data set.

The system may further include training, by the AI model, the AI model using a comparison result by comparing the information of the data format output from the AI model with the GT stored in the data set.

In the system, the parameter included in the line information may be configured to include an X-axis value of a chart line, a function, and a coefficient of the function.

In the system, the data set may include a first data set and a second data set, and a difference between a coefficient of the function included in the second data set and a coefficient of the function included in the first data set may be less than a preset value.

In the system, the maximum value of values of the function may be greater than a preset maximum function value, and the minimum value of values of the function may be less than a preset minimum function value.

In the system, the parameter included in the line information may be configured to include a color or a shape of a line or a point.

In the system, the parameter included in the meta information may be configured to include a chart title, an X-axis name, a Y-axis name, and a legend.

In the system, a value applied to each parameter may be selected based on a predetermined probability for each of the predetermined values.

A method for implementing a chart de-rendering model according to another aspect of the present invention includes storing, by a data set generation model, line information, which is information about at least one line of a chart, and meta information, which is information about meta data, as ground truth (GT), storing an image formed using the GT as a chart image, and outputting the GT and the chart image as a data set, inputting the chart image stored in the data set into an AI model and outputting a data format in which information of the chart is predicted, and inputting the data format into a performance evaluation model and outputting a performance evaluation result for the AI model by comparing information of the data format with the GT stored in the data set, wherein a value applied to each parameter included in the line information and each parameter included in the meta information is selected from among predetermined values.

The method may further include inputting the data format output from the AI model into the performance evaluation model and outputting the performance evaluation result for the AI model by comparing the information of the data format with the GT stored in the data set.

The method may further include comparing, by the AI model, the information of the data format output from the AI model with the GT stored in the data set, and training the AI model using a comparison result.

In the method, the parameter included in the line information may be configured to include an X-axis value of a chart line, a function, and a coefficient of the function.

In the method, the data set may include a first data set and a second data set, and a difference between a coefficient of the function included in the second data set and a coefficient of the function included in the first data set may be less than a preset value.

In the method, the maximum value of values of the function may be greater than a preset maximum function value, and the minimum value of values of the function may be less than a preset minimum function value.

In the method, the parameter included in the line information may be configured to include a color or a shape of a line or a point.

In the method, the parameter included in the meta information may be configured to include a chart title, an X-axis name, a Y-axis name, and a legend.

In the method, a value applied to each parameter may be selected based on a predetermined probability for each of the predetermined values.

A program according to still another aspect of the present invention may be stored in a computer-readable recording medium to implement a chart de-rendering model according to the embodiments of the present invention, in conjunction with a computer.

### [Advantageous Effects]

According to the present invention, a data set that fully includes information about a chart can be derived, a large number of chart images formed in various styles can be generated with high degrees of freedom using parameters of line information and meta information, and by using a method of appropriately selecting the parameters of the line information and the meta information, the output results can be classified into an experimental group and a control group, thereby more accurately evaluating or training an AI model.

In addition, according to the present invention, a large amount of data sets including charts of a similar shape can be generated in order to evaluate whether the AI model can accurately recognize a chart of a specific shape, or to train the AI model to accurately recognize a chart of a specific shape.

In addition, according to the present invention, it is possible to prevent the shape of the chart included in the data set from being distorted so that the AI model can be accurately evaluated or efficiently trained.

In addition, according to the present invention, a large amount of data sets including charts having various lines or points can be output so that the AI model can be accurately evaluated or efficiently trained.

In addition, according to the present invention, a large amount of data sets including complete meta information can be output to accurately evaluate whether the AI model accurately recognizes meta information included in the chart image or to train the AI model to accurately recognize the meta information included in the chart image.

Effects of the present invention are not limited to the above-described effects, and other effects that are not mentioned will be clearly understood by those skilled in the art from the following description.

### [Description of Drawings]

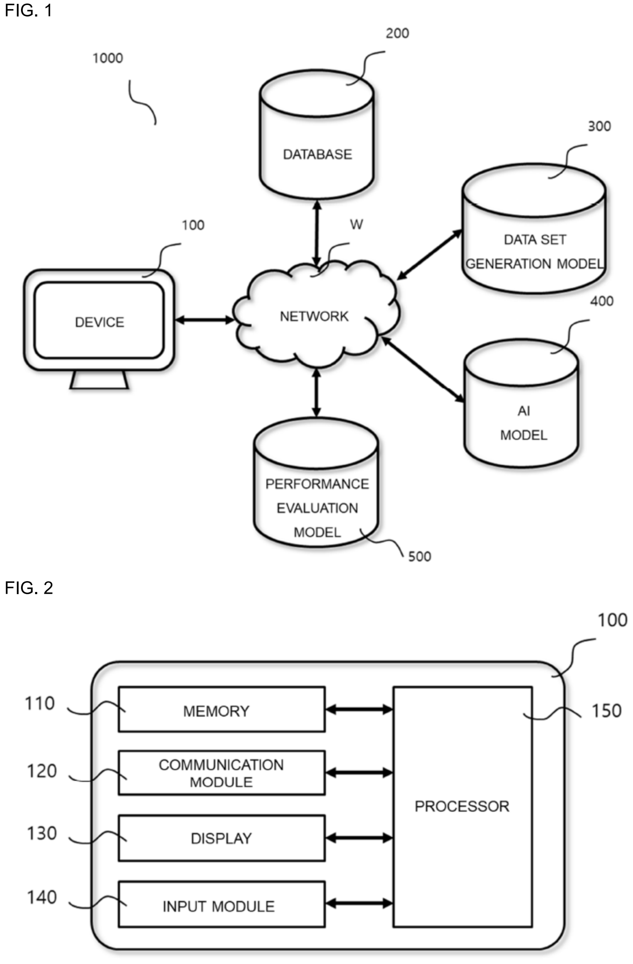

FIG. 1 is a schematic diagram of a system for implementing a method for evaluating the performance of an artificial intelligence model that de-renders a chart or training the artificial intelligence model by constructing a data set including chart information, according to one embodiment of the present disclosure.
FIG. 2 is a block diagram for explaining a configuration of a device for evaluating the performance of the artificial intelligence model that de-renders the chart or training the artificial intelligence model by constructing the data set including the chart information, according to one embodiment of the present disclosure.

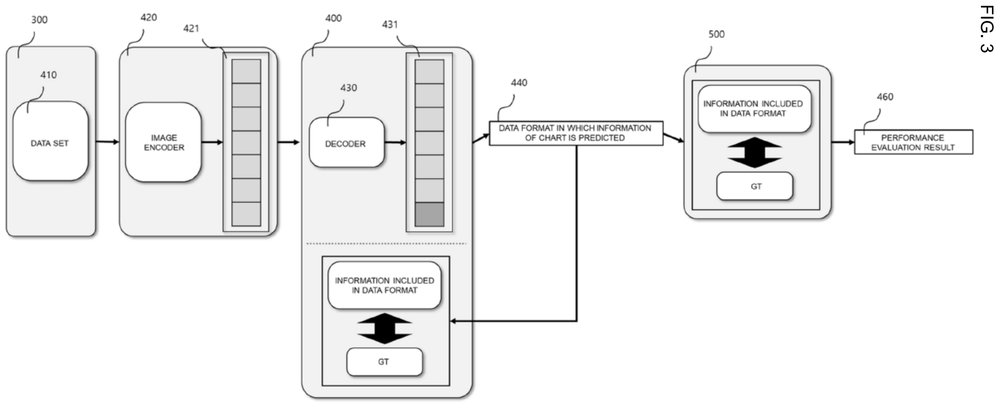

FIG. 3 is a block diagram for explaining the method for evaluating the performance of the artificial intelligence model that de-renders the chart or training the artificial intelligence model by constructing the data set including the chart information, according to embodiments of the present invention.

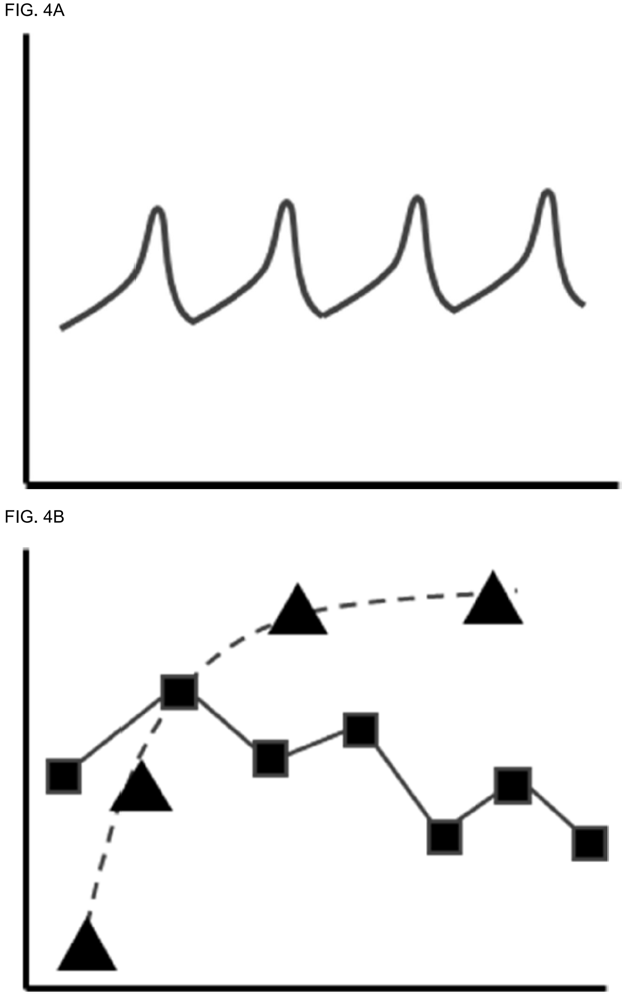

FIGS. 4 to 6 are examples of chart images output from a data set generation model, according to embodiments of the present invention.

### [Modes of the Invention]

The following embodiments are provided as examples so that the spirit of the present invention can be sufficiently conveyed to those skilled in the art to which the present invention pertains. Therefore, the present invention is not limited to the embodiments described below and may be specified in other forms.

The same reference numerals refer to the same components throughout the present invention. The present invention does not describe all elements of the embodiments, and common content in the art to which the present invention pertains or content that overlaps between the embodiments will be is omitted. Terms "unit," "module," "member," and "block" used in the specification may be implemented as software or hardware, and according to the embodiments, a plurality of "units," "modules," "members," and "blocks" may be implemented as one component, or one "unit," "module," "member," and "block" may also include a plurality of components.

Throughout the specification, when a first component is described as being "connected" to a second component, this includes not only a case in which the first component is directly connected to the second component but also a case in which the first component is indirectly connected to the second component, and the indirect connection includes connection through a wireless communication network.

In addition, when a certain portion is described as "including" a certain component, it means further including other components rather than precluding other components unless specifically stated otherwise.

Throughout the present specification, when a first member is described as being positioned "on" a second member, this includes both a case in which the first member is in contact with the second member and a case in which a third member is present between the two members.

Terms such as first and second are used to distinguish one component from another, and the components are not limited by the above-described terms.

A singular expression includes plural expressions unless the context clearly dictates otherwise.

In each operation, identification symbols are used for convenience of explanation, and the identification symbols do not describe the sequence of each operation, and each operation may be performed in a different sequence from the specified sequence unless a specific sequence is clearly described in context.

A system for evaluating the performance of an artificial intelligence model that de-renders a chart or training the artificial intelligence model by constructing a data set including chart information according to the present invention may include a device, and the device may include all types of devices capable of performing computational processing and providing results to a user. For example, the system for evaluating the performance of the artificial intelligence model that de-renders the chart or training the artificial intelligence model by constructing the data set including the chart information according to the present invention may include at least one of a computer, a server device, and a portable terminal, or may be implemented in any one form having the same or similar functions thereof. However, the present invention is not limited thereto.

Here, the computer may include, for example, a notebook, a desktop, a laptop, a tablet PC, a slate PC, etc., which are equipped with a web browser.

The server device is a server that processes information in communication with an external device, and may include an application server, a computing server, a database server, a file server, a game server, a mail server, a proxy server, and a web server.

The portable terminal is, for example, a wireless communication device ensuring portability and mobility and may include all kinds of handheld-based wireless communication devices such as a personal communication system (PCS), a global system for mobile communications (GSM), a personal digital cellular (PDC), a personal handyphone system (PHS), a personal digital assistant (PDA), international mobile telecommunication-2000 (IMT-2000), code division multiple access-2000 (CDMA-2000), w-code division multiple access (W-CDMA), a wireless broadband internet (WiBro) terminal, a smart phone, and wearable devices such as a watch, a ring, a bracelet, an anklet, a necklace, glasses, contact lenses, or a head-mounted device (HMD).

Hereinafter, embodiments of the present invention will be described in detail with reference to the accompanying drawings.

The present invention relates to a system, method, and program for evaluating the performance of a chart de-rendering model or training the model by constructing a data set including chart information, and more particularly, the present invention relates to a system, method, and program for evaluating the performance of an artificial intelligence model that de-renders a chart or training the artificial intelligence model by constructing a data set including chart information.

FIG. 1 is a schematic diagram of a system for evaluating the performance of a chart de-rendering model or training the model by constructing a data set including chart information according to one embodiment of the present invention.

*As shown in FIG. 1, a system 1000 may include a device 100, a database 200, a data set generation model 300, an AI model 400, and a performance evaluation model 500.

The device 100, the database 200, the data set generation model 300, the AI model 400, and the performance evaluation model 500 included in the system 1000 may perform communication via a network W. Here, the network W may include a wired network and a wireless network. For example, the network may include various networks such as a local area network (LAN), a metropolitan area network (MAN), and a wide area network (WAN).

In addition, the network W may also include the well-known world wide web (WWW). However, the network W according to embodiments of the present invention is not limited to the above-listed networks and may include, at least in part, a well-known wireless data network, a well-known telephone network, or a well-known wired and wireless television network.

The device 100 may input the data set generated by the data set generation model 300 into the AI model 400 and output information about the chart. Based on the output information about the chart, the performance evaluation model 500 may evaluate the performance of the AI model 400, and the AI model 400 may perform training.

The data set generation model 300 generates a data set 410 that is used for chart de-rendering through AI and inputs the data set into the AI model 400. The data set 410 is generally the same as that used to train the AI model or evaluate the performance of the AI model, but is not limited thereto. The data set generated through the data set generation model 300 is composed of a chart image including text, lines, etc., ground truth (GT) including the information about the chart, and the like. The data set includes a train set used to evaluate the accuracy of the AI model through the results of chart de-rendering using artificial intelligence, a test set used to train (e.g., deep learning, etc.) the AI model used for chart de-rendering, and the like.

A form of the chart included in the data set may be a vertical/horizontal bar chart, a line chart, a pie chart, an area chart, a scatter chart, a radar chart, a histogram, and/or a waterfall chart. The form of the chart may be a single form or a combined form of a plurality of forms. However, the chart used in the present invention is not limited thereto, and the chart may include any form of chart. In addition, the chart may include text information in addition to information (e.g., a line, a circle, etc.) that visualizes numerical values, etc., and specifically, may include annotation information of the chart, a legend or title of the chart, a name of each axis (e.g., X-axis, Y-axis, Z-axis, etc.), numerical values of raw data of points included in the chart (e.g., numerical values of X-axis and Y-axis of points included in the chart), etc.

The information about the chart output from the AI model 400 may be information that represent features of the chart and include meta information, data information, etc. The meta information may include names of X-axis and Y-axis, a name of an entity group recorded in the legend, etc. The data information may include numerical values of X-axis and/or Y-axis of each entity, etc.

The information about the chart output from the AI model 400 may be input into the performance evaluation model 500, and the performance evaluation model 500 evaluates the performance of the AI model 400 by comparing the output information about the chart with the GT included in the data set.

A performance evaluation result output from the performance evaluation model 500 indicates how accurately the AI model predicts the chart. The performance evaluation result may be represented as a score expressed in numerical form, a chart expressed in image form, and the like, but is not limited thereto.

In addition, the device 100 may compare the information about the chart output from the AI model 400 with the information about the chart stored in the data set, and the AI model 400 may perform training using the comparison result.

The database 200 may store various types of data (e.g., data sets) for training or evaluating the performance of the AI model 400. In addition, the database 200 may store the chart image, the information about the chart, information about a performance evaluation method, information about a data set generation method, and the like, and in various embodiments, may also stare output data output by the AI model 400. However, the system 1000 may not include the database 200 when the training of the AI model 400 is completed.

FIG. 1 shows a case in which the database 200 is implemented outside the device 100. In this case, the database 200 may be connected to the device 100 in a wired or wireless communication manner. However, this is only one embodiment, and the database 200 may also be implemented as one component of the device 100.

FIG. 1 shows a case in which the AI model 400 is implemented outside the device 100 (e.g., implemented in a cloud-based manner), but is not limited thereto, and may be implemented as one component of the device 100.

FIG. 2 is a block diagram for explaining a configuration of a device for evaluating the performance of the artificial intelligence model that de-renders the chart or training the artificial intelligence model by constructing the data set including the chart information, according to one embodiment of the present invention.

As shown in FIG. 2, the device 100 may include a memory 110, a communication module 120, a display 130, an input module 140, and a processor 150. However, the present invention is not limited thereto, and software and hardware components of the device 100 may be modified/added/omitted according to a required operation within a scope obvious to those skilled in the art. In addition, the device 100 may be replaced with a system, and the device 100 may include a plurality of devices and in this case, each component included in the device 100 may be included in at least one of the plurality of devices.

The memory 110 may store data supporting various functions of the device 100 and a program for the operation of the processor 150, store input/output data, and store a plurality of application programs or applications that are driven on the present device, data, command and the AI model for the operation of the device 100. At least some of the application programs may be downloaded from an external server via wireless communication.

Such memory 110 may include at least one type of storage medium among a flash memory type, a hard disk type, a solid state disk type (SSD type), a silicon disk drive type (SDD type), a multimedia card micro type, a card-type memory (e.g., an SD or XD memory), a random access memory (RAM), a static random access memory (SRAM), a read-only memory (ROM), an electrically erasable programmable ROM (EEPROM), a programmable ROM (PROM), a magnetic memory, a magnetic disk, and an optical disk.

In addition, the memory 110 may be separate from the device, and may include a database that connected in a wired or wireless communication manner. The database 200 shown in FIG. 1 may be implemented as one component of the memory 110.

The communication module 120 may include one or more components that enable communication with an external device, and may include at least one of, for example, a broadcasting reception module, a wired communication module, a wireless communication module, a short-range communication module, or a position information module.

The wired communication module may include not only various wired communication modules such as a local area network (LAN) module, a wide area network (WAN) module, and a value added network (VAN) module, but also various cable communication modules such as a universal serial bus (USB), a high definition multimedia interface (HDMI), a digital visual interface (DVI), a recommended standard 232 (RS-232), power line communication, and plain old telephone service (POTS).

In addition to the WiFi module and the wireless broadband (WiBro) module, the wireless communication module may include a wireless communication module for supporting various wireless communication methods such as global system for mobile communication (GSM), code division multiple access (CDMA), wideband CDMA (WCDMA), universal mobile telecommunications system (UMTS), time division multiple access (TDMA), long term evolution (LTE), 4G, 5G, or 6G.

The display 130 displays (outputs) information or data that are processed in the device 100, data that are input or output through the AI model 400, etc. In addition, the display 130 may display execution screen information of an application program (e.g., an application) driven on the device 100, or user interface (UI) or graphic user interface (GUI) information according to such execution screen information.

The input module 140 is for receiving information from a user, and when the user inputs information through an input unit, the processor 150 may control the operation of the device 100 to correspond to the input information.

The input module 140 may include a hardware physical key (e.g., a button located on at least one of a front surface, a back surface, and a side surface of the present device, a dome switch, a jog wheel, a jog switch, etc.) and a software touch key. As an example, the touch key may be formed as a virtual key, a soft key, or a visual key that is displayed on a touchscreen type of the display 130 through software processing or may be formed as the touch key disposed a portion other than the touchscreen. Meanwhile, the virtual key or visual key may have various forms and may be displayed on the touchscreen, and may be formed as, for example, a graphic, text, an icon, a video, or a combination thereof.

The processor 150 may be implemented with a memory that stores data for an algorithm for controlling the operations (including training or execution of the AI model) of the components in the device 100 or a program that reproduces the algorithm, and at least one processor (not shown) that performs the above-described operation using the data stored in the memory. In this case, the memory and the processor may each be implemented as separate chips or may be implemented as a single chip.

In one embodiment, the system 1000 or the device 100 according to the present invention may include at least one processor, and when including a plurality of processors, the plurality of processors may be included in different devices 100.

In addition, the processor 150 may control the operations of the components by combining any one or a plurality of the above-described components in order to implement various embodiments according to the present disclosure, which will be described below, on the device 100.

FIG. 3 is a block diagram for explaining the method for evaluating the performance of the chart de-rendering model or training the model by constructing the data set including the chart information, according to an embodiment of the present invention.

Referring to FIG. 3, the data set generation model 300 generates the data set 410 composed of the chart image including text, lines, etc., the ground truth (GT) including the information about the chart, and the like. Here, the chart image includes a title, an axis name, legend information, numerical values, and the like. A form of the chart image included in the data set 410 may be a vertical/horizontal bar chart, a line chart, a pie chart, an area chart, a scatter chart, a radar chart, a histogram, and/or a waterfall chart, but is not limited thereto. In addition, the form of the chart may be a single form or a combined form of a plurality of forms.

Here, the GT of the data set generated by the data set generation model 300 refers to the information about the chart, and includes line information, which is information (e.g., X-axis values of a chart line, a function, a coefficient of the function, maximum/minimum function values, a color of a line or a point, a shape of a line or a point, etc.) about lines formed in the chart, and meta information, which is information (e.g., a chart title, an X-axis name, a Y-axis name, a legend, etc.) about meta data.

In this case, a value applied to each parameter included in the line information and each parameter included in the meta information is selected from among predetermined values.

For example, among the parameters included in the line information, the "function" parameter may be configured to be selected as a sum of one or more functions from a category including a polynomial function, sinusoidal function, gaussian function, exponential function, logarithm function, pareto function, random function, etc. In particular, when a plurality of sinusoidal functions are used, all periodic functions can be represented by Fourier series (more specifically, the periodic function shown in FIG. 4A can also be represented by using the plurality of sinusoidal functions).

In addition, for example, by predetermining categories of colors or shapes of lines or points and allowing selection therefrom, as shown in FIG. 4B, a chart in which a dotted line and a solid line simultaneously appear, a chart in which a line with triangular points and a line with quadrangular points simultaneously appear, and the like may also be configured.

Therefore, the present invention may derive the data set that fully includes the information about the chart, generate a large number of chart images formed in various styles with high degrees of freedom using the parameters of the line information and the meta information, classify the output results into an experimental group and a control group by using a method of appropriately selecting the parameters of the line information and the meta information, thereby more accurately evaluating or training an AI model.

Next, the data set 410 generated through the data set generation model 300 is input into an image encoder 420. The image encoder 420 follows a generally used encoder architecture and serves to convert the input chart 410a into a first embedding 421 that may be processed by the AI model 400.

Next, the first embedding 421 output from the image encoder 420 is input into the AI model 400 including a decoder 430 that performs meta decoding, data decoding, and the like. The decoder 430 decodes the input first embedding 421 to extract the meta information (e.g., chart title, X-axis name, Y-axis name, legend), the data information (e.g., data point numerical values, etc.) of the chart, and the like, and outputs the meta information and the data information as a second embedding 431.

As such, the AI model may ultimately output a data format 440 in which the information of the chart is predicted, that is, a data format including the meta information, the data information, and the like, from the output second embedding 431.

Next, the data format 440 output from the AI model may be input into the chart de-rendering performance evaluation model 500. The chart de-rendering performance evaluation model 500 compares the information of the chart (e.g., chart title, X-axis name, Y-axis name, legend, data point numerical values, etc.) included in the data format 440 with the ground truth (GT) included in the data set 410, and derives a performance evaluation result 460 according to a predetermined method.

Meanwhile, the AI model 400 may perform training using the result of comparing the output data format 440 with the information about the chart stored in the data set. The training of the AI model 400 may be performed using hardware resources such as a central processing unit (CPU) and/or a graphics processing unit (GPU). The process of training the AI model 400 may be performed through a loss function that measures a difference between the output chart information and the GT stored in the data set. The loss function may vary depending on the type of task performed by the AI model 400 or the characteristics of the AI model 400 itself. Mean squared error (MSE), cross-entropy loss, and the like may be used as the loss function, but the loss function is not limited thereto. Since the AI model 400 may perform better predictions when training is conducted to minimize the computed loss, the AI model is optimized by adjusting the weights of the model in a direction that minimizes the computed loss. This optimization process may be performed using a backpropagation algorithm.

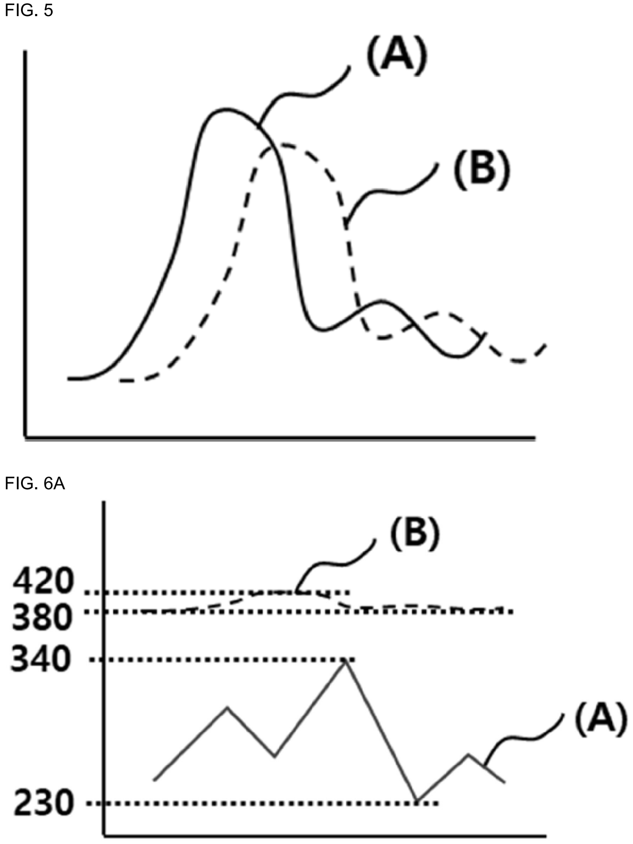

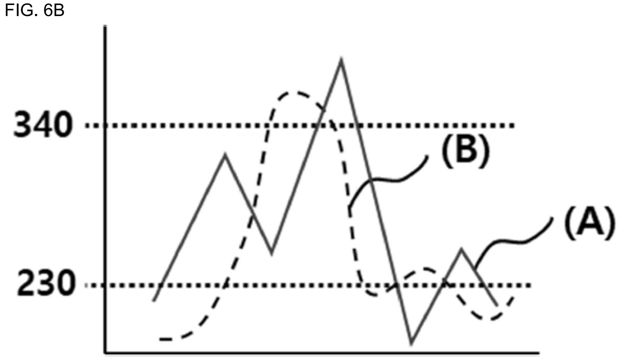

Hereinafter, the parameters included in the line information and the meta information used in the data set generation model 300 will be described in detail with reference to FIGS. 5 and 6.

First, in order to evaluate whether the AI model may accurately recognize a chart of a specific shape, or to train the AI model to accurately recognize a chart of a specific shape, it is necessary to repeatedly input chart images of a similar shape into the AI model. To this end, the parameters of the line information may be configured to include X-axis values of a chart line, a function, and a coefficient of the function, and the like, and the data set generation model 300 may be configured to output a plurality of data sets 410 in which the "function" parameter is kept identical and only the "coefficient of the function" parameter differs by less than a preset value. As such, the plurality of data sets 410 in which the "function" parameter is identical and only the "coefficient of the function" slightly differs represent similar but not exactly matching shapes of the chart lines. For example, as shown in FIG. 5, since charts (A) and (B) have identical "function," they may show similar shapes, but since they have different "coefficients of the function", they may show shapes that do not exactly match.

Therefore, according to the present invention, a large amount of data sets including charts of a similar shape can be generated in order to evaluate whether the AI model can accurately recognize a chart of a specific shape, or to train the AI model to accurately recognize a chart of a specific shape.

Meanwhile, when a range of values of the function included in the data set occupies a small proportion of the entire Y values of the chart, the shape of the line may not be clearly shown. For example, referring to FIG. 6, function values of line (A) are distributed from 230 to 340, and function values of line (B) are distributed from 380 to 420, so the function values of line (B) occupy a smaller proportion of the entire Y values compared to the function values of line (A). As a result, line (B) is shown compressed compared to line (A), thereby causing its shape to be distorted. To solve this problem, it may be configured so that the maximum value of the function of the line is greater than a preset maximum function value, and the minimum value of the function of the line is less than a preset minimum function value. For example, referring to FIG. 6, since the minimum/maximum function values of lines (A) and (B) are positioned outside the range from 230 to 340 when the preset minimum function value is set to 230 and the preset maximum function value is set to 340, the lines are not shown in excessively compressed shapes. That is, since the function values of the chart lines may be more widely distributed than a certain range of the Y values, it is possible to prevent the phenomenon that the line is distorted in a compressed shape when the function values of the chart occupies a small proportion of the entire Y values of the chart.

Therefore, the present invention can prevent the shape of the chart included in the data set from being distorted so that the AI model can be accurately evaluated or efficiently trained.

Meanwhile, the line included in the chart may be formed as a dotted line or a straight line, and the color thereof may vary. In addition, a shape of the point represented on the line may be represented in various shapes such as a circle, quadrangle, triangle, etc. In order for the data set 410 including various charts to be output and input to the AI model, the parameters included in the line information of the data set may include a color or a shape of a line or a point.

Therefore, according to the present invention, a large amount of data sets including charts having various lines or points can be output so that the AI model can be accurately evaluated or efficiently trained.

Meanwhile, the AI model recognizes not only the numerical information included in the date but also the meta information from the input chart image. In order to evaluate or train the AI model, it is necessary to input a large amount of data sets fully including the meta information (e.g., the names of the X-axis and Y-axis, the names of entity groups recorded in the legend, etc.) about the chart into the AI model. To this end, the data generation model 300 also stores the meta information about the chart in addition to the line information as the GT in the data set 410. Here, the parameters included in the meta information may include a chart title, an X-axis name, a Y-axis name, and a legend, etc., and a value applied to each parameter of the meta information may be selected from among predetermined values. For example, among the parameters of the meta information, a value used for the X-axis name is predetermined as population, year, blood collection amount, blood sugar, fiscal year, etc., and a specific value is selected and reflected through the data generation model.

Therefore, according to the present invention, a large amount of data sets including complete meta information can be output to evaluate whether the AI model accurately recognizes the meta information included in the chart image or to train the AI model to accurately recognize the meta information included in the chart image.

Meanwhile, it may be necessary to intensively evaluate the recognition performance of the AI model for a chart having a specific parameter or to intensively train the AI model to improve its recognition performance for the chart having the specific parameter. In this case, it is necessary to intensively output charts having the specific parameter from the data set generation model 300 and input the charts into the AI model. To this end, a value applied to each parameter used in the data set generation model 300 may be selected from among predetermined values, and may be selected based on a certain probability for each predetermined value. For example, regarding the "function" among the parameter values, when there is a need to intensively output "gaussian function," by assigning a higher probability to "gaussian function" compared to other "function" values (e.g., polynomial function, exponential function, logarithm function, etc.), the data set may be configured to include a large number of charts related to the "gaussian function".

Therefore, according to the present invention, a large number of chart images of various styles can be generated with high degrees of freedom, and in particular, a necessary data set can be intensively generated.

Meanwhile, the method for evaluating the performance of the chart de-rendering model or training the model by constructing the data set including the chart information, according to embodiments of the present invention, may be implemented by the system described with reference to FIG. 1.

AI models according to embodiments of the present invention may be controlled, executed, trained, driven, etc. by the processor, and accordingly, at least one of the tasks of executing, training, and driving the AI models may be performed by at least one processor. In addition, the AI models may be stored in the memory, and the feature data according to the present invention may also be stored in memory.

Meanwhile, disclosed embodiments may be implemented in the form of a recording medium in which computer-executable commands are stored. The commands may be stored in the form of program code, and when executed by the processor, program modules may be generated to perform operations of the disclosed embodiments. The recording medium may be implemented as a computer-readable recording medium.

The computer-readable recording medium includes all types of recording media in which computer-decodable commands are stored. For example, there may be a read only memory(ROM), a random access memory(RAM), a magnetic tape, a magnetic disk, a flash memory, an optical data storage device, and the like.

As described above, the disclosed embodiments have been described with reference to the accompanying drawings. Those skilled in the art to which the present disclosure pertains will understand that the present disclosure may be implemented in different forms from the disclosed embodiments without departing from the technical spirit or essential features of the present disclosure. The disclosed embodiments are illustrative and should not be construed as being limited.

## Claims

1. A system for implementing a chart de-rendering model, the system comprising:
at least one processor; and
at least one memory storing a command or information that cause the at least one processor to perform an operation,
wherein the operation performed by the command includes:
storing, by a data set generation model, line information, which is information about at least one line of a chart, and meta information, which is information about meta data, as ground truth (GT), storing an image formed using the GT as a chart image, and outputting the GT and the chart image as a data set;
inputting a chart image stored in the data set into an AI model and outputting a data format in which information of the chart is predicted; and
inputting the data format into a performance evaluation model and outputting a performance evaluation result for the AI model by comparing information of the data format with the GT stored in the data set,
wherein a value applied to each parameter included in the line information and each parameter included in the meta information is selected from among predetermined values.

2. The system of claim 1, further comprising
inputting the data format output from the AI model into the performance evaluation model and outputting the performance evaluation result for the AI model by comparing the information of the data format with the GT stored in the data set.

3. The system of claim 1, further comprising
comparing, by an AI model, the information of the data format output from the AI model with the GT stored in the data set, and training an AI model using a comparison result.

4. The system of claim 1, wherein the parameter included in the line information is configured to include an X-axis value of a chart line, a function, and a coefficient of the function.

5. The system of claim 4, wherein the data set includes s a first data set and a second data set, and
a difference between a coefficient of the function included in the second data set and a coefficient of the function included in the first data set is less than a preset value.

6. The system of claim 4, wherein the maximum value of values of the function is greater than a preset maximum function value, and the minimum value of values of the function is less than a preset minimum function value.

7. The system of claim 1, wherein the parameter included in the line information is configured to include a color or a shape of a line or a point.

8. The system of claim 1, wherein the parameter included in the meta information is configured to include a chart title, an X-axis name, a Y-axis name, and a legend.

9. The system of claim 2, 7, or 8, wherein a value applied to each parameter is selected based on a predetermined probability for each of the predetermined values.

10. A method for implementing a chart de-rendering model, the method comprising:
storing, by a data set generation model, line information, which is information about at least one line of a chart, and meta information, which is information about meta data, as ground truth (GT), storing an image formed using the GT as a chart image, and outputting the GT and the chart image as a data set;
inputting a chart image stored in the data set into an AI model and outputting a data format in which information of the chart is predicted; and
inputting the data format into a performance evaluation model and outputting a performance evaluation result for the AI model by comparing information of the data format with the GT stored in the data set,
wherein a value applied to each parameter included in the line information and each parameter included in the meta information is selected from among predetermined values.

11. The method of claim 10, further comprising
inputting the data format output from the AI model into the performance evaluation model and outputting the performance evaluation result for the AI model by comparing the information of the data format with the GT stored in the data set.

12. The method of claim 10, further comprising
comparing, by an AI model, the information of the data format output from the AI model with the GT stored in the data set, and training an AI model using a comparison result.

13. The method of claim 10, wherein the parameter included in the line information is configured to include an X-axis value of a chart line, a function, and a coefficient of the function.

14. The method of claim 13, wherein the data set includes s a first data set and a second data set, and
a difference between a coefficient of the function included in the second data set and a coefficient of the function included in the first data set is less than a preset value.

15. The method of claim 13, wherein the maximum value of values of the function is greater than a preset maximum function value, and the minimum value of values of the function is less than a preset minimum function value.

16. The method of claim 10, wherein the parameter included in the line information is configured to include a color or a shape of a line or a point.

17. The method of claim 10, wherein the parameter included in the meta information is configured to include a chart title, an X-axis name, a Y-axis name, and a legend.

18. The system of claim 13, 16, or 17, wherein a value applied to each parameter is selected based on a predetermined probability for each of the predetermined values.

19. A program stored in a computer-readable recording medium to execute the method of any one of claims 11 to 18 in conjunction with a computer.
